(19) Europäisches Patentamt
European Patent Office
Office européen des brevets

(11) EP 2 743 312 B1

(12) **EUROPEAN PATENT SPECIFICATION**

(45) Date of publication and mention of the grant of the patent:
**15.06.2016 Bulletin 2016/24**

(21) Application number: **12821863.3**

(22) Date of filing: **07.08.2012**

(51) Int Cl.:
***C08J 9/14*** *(2006.01)* ***C08J 9/00*** *(2006.01)*
***C08L 61/06*** *(2006.01)* ***C08L 83/04*** *(2006.01)*
***C08K 5/5419*** *(2006.01)* ***C08K 5/34*** *(2006.01)*

(86) International application number:
**PCT/JP2012/070037**

(87) International publication number:
**WO 2013/021982 (14.02.2013 Gazette 2013/07)**

(54) **FOAMABLE RESOL-TYPE PHENOL RESIN MOLDING MATERIAL AND PHENOL RESIN FOAM**

SCHÄUMBARES FORMMATERIAL AUS PHENOLHARZ VOM RESOLTYP UND PHENOLHARZSCHAUMSTOFF

MATIÈRE À MOULER DE RÉSINE PHÉNOLIQUE DE TYPE RÉSOL MOUSSABLE ET MOUSSE DE RÉSINE PHÉNOLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2011 JP 2011172649**

(43) Date of publication of application:
**18.06.2014 Bulletin 2014/25**

(73) Proprietor: **ASAHI YUKIZAI CORPORATION**
**Nobeoka-shi, Miyazaki (JP)**

(72) Inventors:
- **YAMADA, Shuji**
  **Niwa-gun**
  **Aichi 480-0105 (JP)**
- **UEDA, Yasuhiro**
  **Tokyo 105-6120 (JP)**

(74) Representative: **Bailey, Sam Rogerson et al**
**Mewburn Ellis LLP**
**City Tower**
**40 Basinghall Street**
**London EC2V 5DE (GB)**

(56) References cited:
**EP-A1- 1 923 422** **JP-A- 2 185 538**
**JP-A- 7 196 838** **JP-A- 58 076 432**
**JP-A- 59 006 230** **JP-A- 2000 087 467**
**JP-A- 2002 037 910** **JP-A- 2007 070 507**

- **DATABASE WPI Week 200253 Thomson Scientific, London, GB; AN 2002-492742 XP002732265, -& JP 2002 037910 A (ASAHI YUKIZAI KOGYO KK) 6 February 2002 (2002-02-06)**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 743 312 B1

## Description

### TECHNICAL FIELD

The present invention relates to a foamable resol-type phenolic resin forming or molding material and a phenolic resin foam product obtained by using the forming material. Particularly, the present invention relates to a foamable resol-type phenolic resin forming or molding material that gives a phenolic resin foam product which is excellent in flame retardancy, fireproofness, and long-term stability of its heat insulation property, suffers from a reduced amount of dimensional change during its formation, has an improved strength and an improved brittleness, absorbs less water and has a higher pH as compared with conventional resin foam products, thereby exhibiting an excellent property of preventing corrosion of a contact member. The present invention also relates to a phenolic resin foam product which is obtained by foaming and curing the above-described forming material and which has the above-described properties.

### BACKGROUND ART

Phenolic resin foam products are conventionally used as heat-insulating materials in construction and other industrial fields owing to their excellent properties of heat insulation, flame retardancy and fireproofness, for example.

Regarding the heat insulation property of plastic heat-insulating materials including the phenolic resin foam products, it is known that their thermal conductivity changes with time after their production. This is caused when gas in foam cells is diffused out of a system. It is a phenomenon in which a blowing agent permeates cell membranes, and is gradually replaced with air in the atmosphere. It is known that the phenolic resin foam products also suffer from a phenomenon in which their thermal conductivity increases with time and their heat insulation property is degraded with time.

Since the heat insulation property of the phenolic resin foam products is gradually impaired due to the above-described phenomenon, it has been a strong need to ensure the long-term (timewise) stability of the heat insulation property of the phenolic resin foam products.

It is known that a phenolic resin foam product having a closed cell structure is excellent in stability of its heat insulation property against the passage of time. As a method of producing the phenolic resin foam product having the closed cell structure, there has been proposed a method which uses a physical blowing agent containing a chloropropane (see Patent Document 1, for example).

In order to further improve the heat insulation property of the phenolic resin foam product, it is important that cells in the phenolic resin foam product are fine and have the closed cell structure. For this purpose, it has been proposed to mix a foam stabilizer (cell stabilizer) with a phenolic resin material when the phenolic resin foam product is produced. There has been disclosed a method of producing the phenolic resin foam product by using an ethylene oxide adduct of castor oil as the foam stabilizer (see Patent Documents 2 and 3, for example).

The phenolic resin foam product is used in various fields, and in some fields, the phenolic resin foam product is required to have a high degree of mechanical property, particularly, low brittleness. Various methods have been proposed for improving the heat insulation property of the phenolic resin foam product and the long-term stability thereof against the passage of time, as described above. However, there is known almost no technique for improving the mechanical property of the phenolic resin foam product, and further reducing an amount of dimensional change during its formation, while maintaining the excellent heat insulation property.

In the production of the phenolic resin foam product, there is generally used a method of foaming and curing a foamable phenolic resin forming material containing at least a phenolic resin, a blowing agent, and a curing agent, wherein the curing agent is selected from acid curing agents including sulfuric acid and organic acids such as benzenesulfonic acid, toluenesulfonic acid and xylenesulfonic acid. The thus obtained phenolic resin foam product contains the above-described acid curing agent and absorbs a large amount of water. Accordingly, when the phenolic resin foam product gets wet with rain, for example, the acid curing agent is extracted with water. As a result, in a case where a metallic member is in contact with the phenolic resin foam product or in the vicinity of the phenolic resin foam product, there is a problem that the metallic member is liable to be corroded.

Patent Document 4 discloses a foamable resol-type phenolic resin forming material characterized by comprising a liquid resol-type phenolic resin, a blowing agent and an acid curing agent, and further comprising a nitrogen containing bridged cyclic compound as additive, wherein said blowing agent is a chloropropane, and said nitrogen-containing bridged cyclic compound is hexamethylenetetramine.

PRIOR-ART DOCUMENTS

PATENT DOCUMENTS

Patent Document 1: JP-B-5-87093
Patent Document 2: JP-A-61-268733
Patent Document 3: JP-A-63-39933
Patent Document 4: EP-A-1923422

SUMMARY OF THE INVENTION

PROBLEMS TO BE SOLVED BY THE INVENTION

The present invention was made in view of the background art described above. It is therefore a problem to be solved by the present invention to provide a foamable resol-type phenolic resin forming or molding material that gives a phenolic resin foam product which is excellent in flame retardancy, fireproofness, and long-term stability of its heat insulation property, suffers from a reduced amount of dimensional change during its formation, has an improved strength and an improved brittleness, absorbs less water and has a higher pH as compared with conventional resin foam products, thereby exhibiting an excellent property of preventing corrosion of a contact member. It is another problem to be solved by the present invention to provide a phenolic resin foam product having the above-described properties.

MEANS FOR SOLVING THE PROBLEMS

In order to solve the above-described problems, the present invention can be suitably carried out in various modes described below, and these modes can be employed in any combination. It is to be understood that the modes and technical features of the present invention are not limited to those described below and should be understood in view of the entire description.

(1) A foamable resol-type phenolic resin forming material characterized by comprising at least a liquid resol-type phenolic resin, a blowing agent and an acid curing agent, and further comprising a nitrogen-containing bridged cyclic compound and a silicone oil as additives, wherein the blowing agent is a chloropropane, said nitrogen-containing bridged cyclic compound is hexamethylenetetramine, and said silicone oil is dimethylpolysiloxane and/or trimethylmethoxysilane.
(2) The foamable resol-type phenolic resin forming material according to the above-described mode (1), wherein a total amount of the chloropropane and the silicone oil is 5-20 parts by mass with respect to 100 parts by mass of the liquid resol-type phenolic resin.
(3) The foamable resol-type phenolic resin forming material according to the above-described mode (1) or (2), wherein the chloropropane and the silicone oil are used at a mass ratio of from 1:1 to 150:1.
(4) The foamable resol-type phenolic resin forming material according to any one of the above-described modes (1) to (3), wherein the chloropropane is isopropyl chloride.
(5) The foamable resol-type phenolic resin forming material according to any one of the above-described modes (1) to (4), which comprises 0.1-10 parts by mass of the nitrogen-containing bridged cyclic compound with respect to 100 parts by mass of the liquid resol-type phenolic resin.
(6) The foamable resol-type phenolic resin forming material according to any one of the above-described modes (1) to (5), wherein a kinetic viscosity of the dimethylpolysiloxane at 25°C is 5 $mm^2/s$ or less.
(7) The foamable resol-type phenolic resin forming material according to any one of the above-described modes (1) to (6), wherein the acid curing agent is an aryl sulfonic acid.
(8) The foamable resol-type phenolic resin forming material according to any one of the above-described modes (1) to (7), which further comprises 0.125-1.000 part by mass of a foam stabilizer with respect to 1 part by mass of the blowing agent.
(9) The foamable resol-type phenolic resin forming material according to the above-described mode (8), wherein the foam stabilizer is an ethylene oxide adduct of castor oil obtained by adding more than 20 mol and less than 40 mol of ethylene oxide to 1 mol of castor oil.
(10) The foamable resol-type phenolic resin forming material according to any one of the above-described modes (1) to (9), which further comprises a polyester polyol as a plasticizer.

(11) The foamable resol-type phenolic resin forming material according to any one of the above-described modes (1) to (10), which further comprises aluminum hydroxide and/or calcium carbonate as an inorganic filler.

(12) A phenolic resin foam product obtained by foaming and curing a foamable resol-type phenolic resin forming material according to any one of the above-described modes (1) to (11).

(13) The phenolic resin foam product according to the above-described mode (12), which has a thermal conductivity of 0.022 W/m·K or less and a moisture permeance of 60 $ng/m^2 \cdot s \cdot Pa$ or less.

(14) The phenolic resin foam product according to the above-described mode (12) or (13), which has a dimensional change percentage of 2.0% or less.

(15) The phenolic resin foam product according to any one of the above-described modes (12) to (14), which has a pH of 4.0 or more and a brittleness of 20% or less.

(16) The phenolic resin foam product according to any one of the above-described modes (12) to (15), which has a closed cell content of 85% or more and an oxygen index of 29% or more.

(17) The phenolic resin foam product according to any one of the above-described modes (12) to (15), which is provided with a face material on at least one surface thereof.

(18) The phenolic resin foam product according to the above-described mode (17), wherein the face material is at least one material selected from a nonwoven glass fabric, a spunbonded nonwoven fabric, an aluminum-foil-clad nonwoven fabric, a metal plate, a metal foil, a plywood, a calcium silicate plate, a plaster board and a wood cement board.

ADVANTAGES OF THE INVENTION

According to the present invention, there can be provided a foamable resol-type phenolic resin forming material that gives a phenolic resin foam product which is excellent in flame retardancy, fireproofness, and long-term stability of its heat insulation property, suffers from a reduced amount of dimensional change during its formation, has an improved strength and an improved brittleness, absorbs less water and has a higher pH as compared with conventional resin foam products, thereby exhibiting an excellent property of preventing corrosion of a contact member. Further, there can be provided a phenolic resin foam product which is obtained by foaming and curing the above-described forming material and which has the above-described properties.

MODES FOR CARRYING OUT THE INVENTION

A foamable resol-type phenolic resin forming material according to the present invention will be described. The foamable resol-type phenolic resin forming material contains a liquid resol-type phenolic resin, a suitable blowing agent and an acid curing agent, and further contains a nitrogen-containing bridged cyclic compound and a silicone oil as additives, while containing a suitable foam stabilizer, a plasticizer and an inorganic filler, as required.

The liquid resol-type phenolic resin used in the present invention includes phenolic resins obtained by reacting phenols such as phenol, cresol, xylenol, p-alkylphenol, p-phenylphenol, and resorcin, or modified products thereof with aldehydes such as formaldehyde, paraformaldehyde, furfural, and acetaldehyde, in the presence of a catalytic amount of alkali such as sodium hydroxide, potassium hydroxide and calcium hydroxide. However, the liquid resol-type phenolic resin is not limited to the above-described phenolic resins. The ratio between the phenols and the aldehydes is not particularly limited, but the phenols and the aldehydes are generally used at a molar ratio of from about 1.0:1.5 to about 1.0:3.0, and preferably from 1.0:1.8 to 1.0:2.5.

The blowing agent used in the present invention contains a chloropropane. Among conventional chloropropanes, propyl chloride and isopropyl chloride are preferably used in the present invention. Particularly, isopropyl chloride is preferably used. By using these chloropropanes as the blowing agent, it is possible to reduce an initial thermal conductivity of the phenolic resin foam product to be obtained. Further, the chloropropanes cooperate with the silicone oil, making it possible to control a cell structure of the foam product, whereby the foam product can maintain a low degree of thermal conductivity for a long period of time.

The blowing agent used in the present invention is characterized by containing the chloropropane, as described above. However, the blowing agent may contain a suitable amount of fluorinated hydrocarbon compounds (alternatives for chlorofluorocarbon) such as 1,1,1,3,3-pentafluorobutane; chlorinated and fluorinated hydrocarbons such as trichloromonofluoromethane and trichlorotrifluoroethane; hydrocarbons such as isobutane, normal butane, cyclobutane, normal pentane, isopentane, cyclopentane and neopentane; ether compounds such as isopropyl ether; gases such as nitrogen gas, oxygen gas, argon gas and carbon dioxide gas; or a mixture of these gases, to such an extent that the above-described compounds and gases do not impair the performance and physical properties of the phenolic resin foam product of the present invention. The above-descried compounds and gases may be preferably contained in an amount of 0.1-20% by mass, and more preferably 0.5-15% by mass, with respect to the chloropropane. The silicone oil used as the additive in the present invention may be used as the blowing agent in combination with the chloropropane.

In the present invention, the blowing agent is used generally in an amount of 5-15 parts by mass, and preferably 6-10 parts by mass, with respect to 100 parts by mass of the liquid resol-type phenolic resin. The chloropropane is generally 50-100% by mass of the blowing agent, and preferably 70-100% by mass.

In the present invention, the foam stabilizer is advantageously used. The foam stabilizer is contained preferably in an amount of 0.125-1.000 part by mass, more preferably 0.200-0.800 part by mass, and still more preferably 0.300-0.500 part by mass, with respect to 1 part by mass of the blowing agent. By adding a suitable amount of the foam stabilizer to the blowing agent, the foam product having a uniform cell structure can be advantageously obtained. In the present invention, the foam stabilizer containing an ethylene oxide (hereinafter "ethylene oxide" will be abbreviated as "EO") adduct of castor oil is preferably used. The castor oil is a non-drying oil obtained from seeds of castor bean, for example, by expression, and contains unsaturated acids such as ricinoleic acid, oleic acid and linoleic acid, as main components, and a small amount of saturated acids such as stearic acid and dihydroxystearic acid.

The EO adduct of castor oil used as the foam stabilizer in the present invention is preferably obtained by adding more than 20 mol and less than 40 mol of EO to 1 mol of the castor oil.

The EO is added to the castor oil preferably in an amount of more than 20 mol and less than 40 mol for the reasons described as follows. When the molar amount of the added EO is within the above-described range, hydrophobic groups mainly composed of long-chain hydrocarbon groups of the castor oil and hydrophilic groups mainly composed of polyoxyethylene groups formed by the EO are arranged in a well-balanced manner in a molecule, whereby excellent surface activity is obtained. By using the EO adduct of castor oil having such excellent surface activity, cell diameters of the phenolic resin foam product are kept small and cell walls are imparted with flexibility, whereby advantageous effects such as prevention of occurrence of cracks in the cell walls are obtained. The molar amount of the added EO is more preferably 21-38 mol.

As described above, the EO adduct of castor oil is preferably used as the foam stabilizer in the present invention. In addition to the EO adduct of castor oil, there may be used a dimethylpolysiloxane-polyoxyalkylene copolymer, a dimethylpolysiloxane-polyoxyethylene-polyoxypropylene copolymer, and a propylene oxide adduct of castor oil, for example.

The EO adduct of castor oil is contained as the foam stabilizer in the foamable resol-type phenolic resin forming material of the present invention preferably in an amount of 1-5 parts by mass, and more preferably 2-4 parts by mass, with respect to 100 parts by mass of the phenolic resin. When the EO adduct of castor oil is contained in an amount of less than 1 part by mass, it is difficult to form uniformly small cells. On the other hand, when the EO adduct of castor oil is contained in an amount of more than 5 parts by mass, the phenolic resin foam product to be obtained absorbs an increased amount of water and the production cost of the phenolic resin foam product increases.

In the present invention, the nitrogen-containing bridged cyclic compound is used as the additive. By incorporating the nitrogen-containing bridged cyclic compound into the foamable resol-type phenolic resin forming material, the phenolic resin foam product to be obtained can maintain excellent heat insulation property, and at the same time can exhibit unexpected effects such as excellent mechanical strength, improved brittleness, and excellent corrosion preventing property owing to its higher pH as compared with that of conventional resin foam products.

In particular, hexamethylenetetramine is used in view of its effect and availability.

The nitrogen-containing bridged cyclic compound is preferably added in an amount of 0.1-10 parts by mass, and more preferably 0.3-7 parts by mass, with respect to 100 parts by mass of the liquid resol-type phenolic resin in view of a balance between its effect and economic performance.

In the present invention, the silicone oil used as the additive particularly effectively serves to form fine and uniform cells and reduce the density of the cells which form the cell structure. In particular, dimethylpolysiloxane and/or trimethylmethoxysilane are used. The mass ratio between the above-described chloropropane as the blowing agent and the silicone oil is preferably from 1:1 to 150:1, and more preferably from 2:1 to 50:1. When the blowing agent is used alone, it is difficult to control the size of the cells in the foam product to be obtained. In the present invention, the silicone oil is used together with the chloropropane which is used as the blowing agent, whereby the cell structure of the foam product can be controlled. Further, by adjusting the ratio between the chloropropane and the silicone oil, a desired cell structure can be obtained.

When dimethylpolysiloxane is used as the silicone oil, a kinetic viscosity of the dimethylpolysiloxane at 25°C is preferably 5 $mm^2/s$ or less, more preferably 0.1-2 $mm^2/s$, and still more preferably 0.5-1 $mm^2/s$. When the silicone oil having a kinetic viscosity of more than 5 $mm^2/s$ at 25°C is used, there is a risk that a closed cell content of the foam product to be obtained is reduced and the thermal conductivity of the foam product is deteriorated.

A total amount of the chloropropane and the silicone oil is preferably 5-20 parts by mass, and more preferably 6-13 parts by mass, with respect to 100 parts by mass of the liquid resol-type phenolic resin. When the total amount of the chloropropane and the silicone oil is less than 5 parts by mass, there is a risk that a sufficient degree of foamability cannot be obtained and uniform cells cannot be formed. On the other hand, when the total amount of the chloropropane and the silicone oil is more than 20 parts by mass, there is a risk that the density of the foam product decreases and the foam product cannot achieve satisfactory mechanical properties.

In the present invention, inorganic and organic acids are used as the acid curing agent. Examples of the inorganic acids include sulfuric acid and phosphoric acid, and examples of the organic acids include benzenesulfonic acid, ethylbenzenesulfonic acid, p-toluenesulfonic acid, xylenesulfonic acid, naphtholsulfonic acid and phenolsulfonic acid. Any one or any combination of these acid curing agents may be used. Particularly, aryl sulfonic acids such as p-toluenesulfonic acid, xylenesulfonic acid, naphtholsulfonic acid and phenolsulfonic acid are advantageously used since they are well compatible with other components. In order to improve curing property of the phenolic resin, a moisture content of the acid curing agent is preferably 1% or less by mass. Examples of such acid curing agent include xylenesulfonic acid and a mixture of p-toluenesulfonic acid and xylenesulfonic acid.

As the plasticizer which is used as required in the present invention, the plasticizer containing a polyester polyol is preferably used.

The polyester polyol is obtained by reacting a polycarboxylic acid and a polyhydric alcohol. The molecular weight of the polyester polyol is not particularly limited, but the polyester polyol preferably has the weight average molecular weight of about 200-10000, and more preferably 200-5000, from the viewpoint of imparting flexibility to the cell walls and inhibiting deterioration with time. Further, the polyester polyol preferably has at least two hydroxyl groups in one molecule, from the viewpoint of the performance of the polyester polyol. In this respect, the number of carboxyl groups in one molecule of the polycarboxylic acid is not specifically limited as long as it is 2 or more. Also, the number of the hydroxyl groups in one molecule of the polyhydric alcohol is not specifically limited as long as it is 2 or more.

The above-described polyester polyol can be obtained as a reaction product of the polycarboxylic acid having 2 to 4 carboxyl groups and the polyhydric alcohol having 2 to 5 hydroxyl groups, for example. The polyester polyol is preferably a reaction product of a dicarboxylic acid and a dihydric alcohol, which reaction product is mainly composed of a compound represented by the following general formula (I).

[Chemical Formula I]

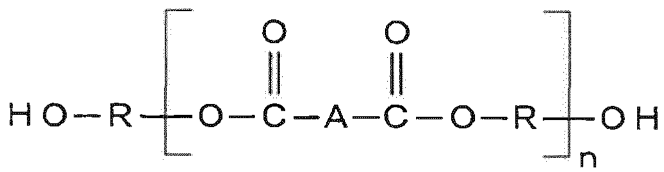

(I)

(In the general formula [I], "A" is a residue remaining after removal of carboxyl groups from the dicarboxylic acid, "R" is a residue remaining after removal of hydroxyl groups from the dihydric alcohol, and "n" is an integer of 1 or more.)

Preferable examples of the dicarboxylic acid which forms "A" in the general formula (I) include aromatic dicarboxylic acids, aliphatic dicarboxylic acids, and alicyclic dicarboxylic acids. Examples of the aromatic dicarboxylic acids include phthalic acid, isophthalic acid, terephthalic acid, naphthalene-2,3-dicarboxylic acid, naphthalene-1,4-dicarboxylic acid, and naphthalene-2,6-dicarboxylic acid. As the aliphatic dicarboxylic acids, saturated aliphatic dicarboxylic acids are preferred in view of stability of the polyester polyol to be obtained. Examples of the saturated aliphatic dicarboxylic acids include adipic acid, pimelic acid, suberic acid, azelaic acid and sebacic acid. As the alicyclic dicarboxylic acids, saturated alicyclic dicarboxylic acids are preferred in view of the stability of the polyester polyol to be obtained. Examples of the saturated alicyclic dicarboxylic acids include cyclohexane-1,2-dicarboxylic acid, cyclohexane-1,3-dicarboxylic acid, and cyclohexane-1,4-dicarboxylic acid.

On the other hand, the dihydric alcohol which forms "R" includes aromatic glycols, aliphatic glycols and alicyclic glycols. Among the above-described dihydric alcohols, the aliphatic glycols and the alicyclic glycols are preferred.

Examples of the aromatic glycols include benzene dimethanols such as benzene-1,2-dimethanol, benzene-1,3-dimethanol, and benzene-1,4-dimethanol; and ethylene oxide adducts or propylene oxide adducts of catechol, resorcinol, hydroquinone, and 2,2-bis(4-hydroxyphenyl)propane (Bisphenol A). When "R" is a residue of the aliphatic glycol, the "R" may have an ether bond (-O-) and/or an ester bond (-COO-) in its molecule. Examples of the aliphatic glycols include alkane diols such as ethylene glycol, propylene glycol, 1,3-propanediol, 1,2-butanediol, 1,4-butanediol, 1,5-pentanediol, 1,6-hexanediol, 1,8-octanediol, and 1,9-nonanediol; oxyalkylene glycols such as diethylene glycol, triethylene glycol, polyethylene glycol, dipropylene glycol, tripropylene glycol, and polypropylene glycol; polyester diols that are ring-opening reaction products of lactones such as β-butyrolactone, γ-butyrolactone, and δ-valerolactone with oxyalkylene glycols such as ethylene glycol, diethylene glycol, and triethylene glycol; and hindered glycols such as 2,2-dimethyl-1,3-propanediol (neopentyl glycol), 2,2-diethyl-1,3-propanediol, 2,2-dipropyl-1,3-propanediol, 2,2-diisopropyl-1,3-propanediol, 2,2-dibutyl-1,3-propanediol, 2,2-diisobutyl-1,3-propanediol, 2-methyl-2-dodecyl-1,3-propanediol, 2-butyl-2-ethyl-1,3-propanediol, and 2-propyl-2-pentyl-1,3-propanediol.

Examples of the alicyclic glycols include cyclopentane-1,2-diol, cyclopentane-1,2-dimethanol, cyclohexane-1,2-diol, cyclohexane-1,2-dimethanol, cyclohexane-1,3-diol, cyclohexane-1,3-dimethanol, cyclohexane-1,4-diol, cyclohexane-1,4-dimethanol, and 2,5-norbornanediol.

The aliphatic glycols and the alicyclic glycols are preferred as the dihydric alcohol. Particularly preferred dihydric alcohols are ethylene glycol, diethylene glycol, propylene glycol, dipropylene glycol, 1,4-butanediol, 1,6-hexanediol, neopentyl glycol, cyclohexane-1,2-dimethanol, cyclohexane-1,3-dimethanol, and cyclohexanedimethanol.

In the above-indicated general formula (I), "n" is an integer of 1 or more, and it is preferably a value at which the weight average molecular weight of the compound represented by the general formula (I) is held within 200-10000, and more preferably 200-5000.

In the present invention, the plasticizer containing the polyester polyol can be produced, for example, by using the dihydric alcohol generally in an amount of 1.2 mol or more, preferably 1.2-5 mol, and more preferably 1.5-5 mol, with respect to 1 mol of the dicarboxylic acid, and carrying out an esterification reaction between the dihydric alcohol and the dicarboxylic acid at a temperature of generally about 100-320°C, and preferably 150-300°C. This esterification reaction is preferably carried out in the presence of an inert gas such as nitrogen gas. Further, there may be used a water-insoluble organic solvent that forms an azeotrope with water, such as toluene and xylene, and the reaction may be carried out at a properly reduced pressure.

In the above-described esterification reaction, an esterification catalyst is generally used. Examples of the esterification catalyst include Broensted acids such as p-toluenesulfonic acid, sulfuric acid and phosphoric acid; Lewis acids such as boron trifluoride complex, titanium tetrachloride, and tin tetrachloride; organic metal compounds such as calcium acetate, zinc acetate, manganese acetate, zinc stearate, alkyltin oxide, and titanium alkoxide; and metal oxides such as tin oxide, antimony oxide, titanium oxide, and vanadium oxide. In view of oxidation stability of the polyester polyol to be obtained, monobutyl tin oxide and tetra-n-butyl orthotitanate are preferred.

As another method, it is possible to employ a method in which an anhydride of the dicarboxylic acid and the dihydric alcohol are reacted with each other, an ester exchange method in which a lower alkyl ester (alkyl group having about 1 to 4 carbon atoms) of the dicarboxylic acid and the dihydric alcohol are reacted with each other, or a method in which a halide of the dicarboxylic acid and the dihydric alcohol are reacted with each other in the presence of a hydrogen halide scavenger.

The thus obtained reaction product is generally a mixture of compounds which are represented by the above-indicated general formula (I), and which have different values of "n". The reaction product generally has a hydroxyl value of about 10-500 mgKOH/g.

The plasticizer that can be used in the present invention preferably contains a compound which is obtained by reacting the aromatic dicarboxylic acid with ethylene glycol, diethylene glycol or 1,4-butanediol at a molar ratio of from about 1:1.5 to about 1:5, and which is represented by the general formula (I-a) given below. Particularly, the plasticizer preferably contains the compound represented by the general formula (I-a) in which "$A^1$" is a 1,2-phenylene group, a 1,3-phenylene group, or a 1,4-phenylene group.

[Chemical Formula II]

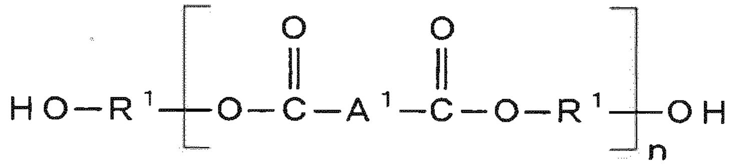

(I-a)

(In the general formula [I-a], "$A^1$" is a 1,2-phenylene group, a 1,3-phenylene group, a 1,4-phenylene group, a 2,3-naphthylene group, a 1,4-naphthylene group, or a 2,6-naphthylene group; "$R^1$" is $-CH_2CH_2-$, $-CH_2CH_2OCH_2CH_2-$, or $-CH_2CH_2CH_2CH_2-$; and "n" is an integer of 1 or more.)

The above-described plasticizer containing the polyester polyol has a structure containing an ester bond and a hydroxyl group which are excellent in hydrophilic nature and surface activity. Accordingly, the plasticizer containing the polyester polyol is well compatible with a hydrophilic phenolic resin liquid, and can be uniformly mixed with the phenolic resin. Further, it is assumed that when the above-described polyester polyol is used, uneven distribution of the cells is prevented and the cells are uniformly distributed in the entire foam product, whereby the phenolic resin foam product having uniform quality can be easily produced.

Further, it is assumed that when the above-described polyester polyol is added to the phenolic resin, flexibility is imparted to the cell walls of the foam product owing to the molecular structure of the polyester polyol which gives surface activity and flexibility, whereby deterioration with time, such as occurrence of cracks in the cell walls, is suppressed, and consequently, the long-term stability of the heat insulation property is improved.

The plasticizer is used generally in an amount of 0.1-20 parts by mass with respect to 100 parts by mass of

the liquid resol-type phenolic resin. When the plasticizer is used within the above-described range, the effect of imparting flexibility to the cell walls can be advantageously exhibited without impairing other performances of the phenolic resin foam product to be obtained. The plasticizer is used preferably in an amount of 0.5-15 parts by mass, and more preferably 1-12 parts by mass.

In the present invention, the polyester polyol is preferably used as the plasticizer. However, other plasticizers such as triphenyl phosphate, dimethyl terephthalate, and dimethyl isophthalate may be used together with the polyester polyol, as required.

The inorganic filler used in the present invention as required can serve to provide the phenolic resin foam product having low thermal conductivity, low acidity, and improved fireproofness. The inorganic filler is used generally in an amount of 0.1-30 parts by mass, and preferably 1-10 parts by mass, with respect to 100 parts by mass of the liquid resol-type phenolic resin.

Examples of the inorganic filler include metal hydroxides and metal oxides such as aluminum hydroxide, magnesium hydroxide, calcium oxide, magnesium oxide, aluminum oxide and zinc oxide; powders of metals such as zinc, magnesium and aluminum; and carbonates of metals such as calcium carbonate, magnesium carbonate, barium carbonate and zinc carbonate. Any one or any combination of the above-described inorganic fillers may be used. Among the above-described inorganic fillers, aluminum hydroxide and/or calcium carbonate are/is preferably used.

The foamable resol-type phenolic resin forming material of the present invention can be prepared as follows, for example. The nitrogen-containing bridged cyclic compound, the silicone oil and the foam stabilizer are added to the liquid resol-type phenolic resin, and they are mixed with each other. Further, the inorganic filler and the plasticizer are added and mixed as required, whereby a mixture is obtained. Then, the blowing agent containing the chloropropane and the acid curing agent are added to the mixture, and the mixture is fed to a mixer and stirred in the mixer.

The phenolic resin foam product of the present invention will be described below.

The phenolic resin foam product of the present invention is obtained by foaming and curing the foamable resol-type phenolic resin forming material of the present invention prepared as described above. Examples of the method of forming the phenolic resin foam product include: (1) a method in which the forming material is cast on a continuous conveyor; (2) a method in which the forming material is partially cast and foamed; (3) a method in which the forming material is foamed under pressure in a mold; (4) a method in which the forming material is charged into a certain large space to form a foamed block; and (5) a method in which the forming material is foamed within a hollow space while being introduced into the space under pressure.

In a preferred method, the foamable resol-type phenolic resin forming material is discharged onto a carrier that is continuously moving, and the discharged material is foamed and shaped while being passed through a heating zone, whereby a desired phenolic resin foam product is produced. More specifically described, the foamable resol-type phenolic resin forming material is discharged onto a face material on a conveyor belt. Then, another face material is placed on the forming material on the conveyor belt, and the resultant set is introduced into a curing furnace. In the curing furnace, the set is pressed with another conveyor belt to adjust the phenolic resin forming material to a predetermined thickness, and the forming material is foamed and cured at about 60-100°C for about 2-15 minutes. The phenolic resin foam product that comes out of the curing furnace is cut to a predetermined length.

The face material used in the present invention is not particularly limited, and can be generally selected from nonwoven fabrics of natural fiber, synthetic fiber such as polyester fiber and polyethylene fiber, inorganic fiber such as glass fiber; paper; an aluminum-foil-clad nonwoven fabric; a metal plate and a metal foil. Preferred face materials are a nonwoven glass fabric, a spunbonded nonwoven fabric, the aluminum-foil-clad nonwoven fabric, the metal plate, the metal foil, a plywood, a structural panel, a particle board, a hardboard, a wood cement board, a flexible plate, a perlite plate, a calcium silicate plate, a magnesium carbonate plate, a pulp cement board, a sheathing board, a medium density fiber board, a plaster board, a lath sheet, a volcanic vitreous composite plate, natural stone, a brick, a tile, a shaped material of glass, a shaped material of light-weight cellular concrete, a shaped material of cement mortar, and a shaped material using a water-curable cement hydrate as a binder component such as a shaped material of glass-fiber-reinforced cement. Any one or any combination of the above-described face materials may be used. It is particularly preferable to use at least one material selected from the nonwoven glass fabric, the spunbonded nonwoven fabric, the aluminum-foil-clad nonwoven fabric, the metal plate, the metal foil, the plywood, the calcium silicate plate, the plaster board and the wood cement plate. The face material may be provided on one surface of the phenolic resin foam product, or may be provided on respective opposite surfaces of the foam product. When the face materials are provided on the respective opposite surfaces of the foam product, the face materials may be the same or may be different from each other. Further, the face material(s) may be later bonded to the surface(s) with an adhesive.

The phenolic resin foam product of the present invention preferably has a thermal conductivity of 0.022 W/m·K or less. When the thermal conductivity exceeds 0.022 W/m·K, the heat insulation property of the phenolic resin foam product is insufficient. Further, the phenolic resin foam product of the present invention generally has a moisture permeance of 60 ng/($m^2$·s·Pa) or less per a thickness of 25 mm of the foam product, and preferably 55 ng/($m^2$·s·Pa) or less.

The phenolic resin foam product of the present invention preferably has a dimensional change percentage of

2.0 or less. When the dimensional change percentage exceeds 2.0, the dimensional stability of the foam product after its formation deteriorates, and the foam product has a large amount of variation in its dimensions.

A brittleness of the phenolic resin foam product of the present invention is preferably 20% or less, and more preferably 10-18%. A pH of the phenolic resin foam product is preferably 4.0 or more, and more preferably within a range of 5.0-8.0.

Further, substantially no hole exists on or through the cell walls, and a closed cell content is generally 85% or more, and preferably 90% or more. An oxygen index is preferably 29% or more, and more preferably 30% or more.

An amount of water absorption of the phenolic resin foam product of the present invention is generally about 8 g/100 $cm^2$, preferably 6 g/100 $cm^2$ or less, and more preferably 4 g/100 $cm^2$ or less.

The phenolic resin foam product of the present invention is prevented from the deterioration with time, and can stably maintain its heat insulation property for a long period of time. Methods for measuring the above-described properties of the phenolic resin foam product will be described below.

EXAMPLES

To further clarify the present invention, there will be described some examples of the present invention. It is to be understood that the present invention is not limited to the details of the following description of the examples and that the invention may be embodied with various changes, modifications and improvements not described above and below, which may occur to those skilled in the art without departing from the spirit and scope of the invention. Each of the phenolic resin foam products obtained in the examples was measured of its physical properties according to following methods.

(1) Density

Measured according to JIS A 9511:2003, 5.6 "Density".

(2) Thermal Conductivity

A 300 mm x 300 mm square sample of the phenolic resin foam product was used, and a low temperature plate was set at 10°C, and a high temperature plate was set at 30°C. The sample was measured with a thermal conductivity tester HC-074 304 (available from EKO INSTRUMENTS CO., LTD.) according to the "Heat flow meter apparatus" of J IS A 1412-2:1999. The sample was left in a 70°C atmosphere for 4 days, and then the thermal conductivity of the sample was measured. The measured value was defined as an initial thermal conductivity.

(3) Estimated Value of Thermal Conductivity after 25 Years

According to ISO 11561 Annex B, a maximum temperature that can be reached in an architectural structure was supposed to be 70°C, and the sample of the phenolic resin foam product was left in the 70°C atmosphere for 25 weeks, and the thermal conductivity of the sample was measured. The measured value was defined as an estimated value of the thermal conductivity after 25 years.

(4) Brittleness

Measured according to JIS A 9511:2003, 5.14 "Brittleness test".

(5) pH

0.5 g of a sample of the phenolic resin foam product which was finely pulverized to 250 μm (60 mesh) or less by using a mortar, for example, was weighed and charged in a 200 ml Erlenmeyer flask with a ground-in stopper. 100 ml of pure water was added into the flask, and the flask was hermetically closed. After the solution in the flask was stirred with a magnetic stirrer at the room temperature (23±5°C) for 7 days, the pH of the solution was measured with a pH meter.

(6) Moisture Permeance per a Thickness of 25 mm

Measured according to ISO 1663:1999 "Rigid plastics- Determination of water vapor transmission properties". Calcium chloride having a diameter of about 2.5-3.5 mm was used as a moisture absorbent.

(7) Oxygen Index

Measured according to JIS K 7201-2 "Plastics-Determination of burning behavior by oxygen index - Part 2: Test at the room temperature".

(8) Closed Cell Content

Measured according to ASTM D2856.

(9) Compressive Strength

Measured according to JIS A 9511.

(10) Corrosion Preventing Property

A 300 mm X 300 mm square galvanized iron plate (thickness: 1 mm; zing coating: 120 g/$m^2$) was provided, and a sample of the phenolic resin foam product of the same size was placed on the galvanized iron plate. The sample was fixed to the iron plate so as not to slip off, whereby a test material was prepared. The test material was placed and left under an accelerated environment of 40°C and 100% RH for 24 weeks, and then the test material was visually observed for corrosion in the surface of the galvanized iron plate in contact with the sample of the phenolic resin foam product.

(11) Water Absorption Amount

Measured according to JIS A 9511.

(12) Dimensional Change Percentage

In order to measure the dimensional change of the phenolic resin foam product during its formation, a sample of the formed phenolic resin foam product was measured of its dimensions according to JIS A 9511. Amounts of contraction of the sample with respect to the dimensions of a frame used for the formation of the sample were calculated as the dimensional change percentage, according to the following formula. The dimensional change percentage was calculated for each of the thickness, width and length of the sample, and an average of the calculated three percentage values was defined as the dimensional change percentage of the phenolic resin foam product.

$$\text{(Dimensional Change Percentage)} = \{\text{(Dimension of the Frame)} - \text{(Dimension of the Sample)}\} \div \text{(Dimension of the Frame)} \times 100\ (\%)$$

- Example 1 -

A three-necked flask equipped with a reflux condenser, a thermometer and a stirrer was charged with 2000 g of phenol, 2675 g of formalin of 47% by mass concentration and 52.0 g of an aqueous solution of sodium hydroxide of 50% by mass concentration, and a reaction was carried out at 80°C for 90 minutes. The reaction mixture was cooled to 40°C, neutralized with an aqueous solution of p-toluensulfonic acid of 50% by mass concentration, and distilled, under heat and at a reduced pressure, to a moisture content of 9% by mass, whereby a liquid resol-type phenolic resin was obtained. The obtained liquid resol-type phenolic resin had a viscosity of 30000 mPa·s at 25°C, a moisture content of 9% by mass, a number average molecular weight of 400 and a free phenol content of 3.4% by mass.

To 100 parts by mass of the thus obtained liquid resol-type phenolic resin, there were added: 3 parts by mass of an EO adduct of castor oil (molar amount of the added EO was 22) as a foam stabilizer; 5 parts by mass of a polyester polyol which was obtained by reacting phthalic acid and diethylene glycol at a molar ratio of 1:2, and which was used as a plasticizer; and 3.5 parts by mass of hexamethylenetetramine as an additive. These liquid resol-type phenolic resin, foam stabilizer, plasticizer and additive were mixed with each other.

Then, there were fed into a pin mixer: 111.5 parts by mass of the thus obtained phenolic resin mixture; 8.0 parts by mass of isopropyl chloride as a blowing agent; 1.0 part by mass of dimethylpolysiloxane (Product Name "KF-96L-0.65cs" available from Shin-Etsu Chemical Co., Ltd.) which has a kinetic viscosity of 0.65 $mm^2/s$ at 25°C, and which was used as a silicone oil as an additive; and 15 parts by mass of a mixture which was obtained by mixing p-toluenesulfonic acid and xylenesulfonic acid at a mass ratio of 2:1, and which was used as a curing agent. They were stirred to obtain

a foamable resol-type phenolic resin forming material. The foamable resol-type phenolic resin forming material was discharged from the pin mixer into a frame of a thickness of 50 mm, a width of 300 mm, and a length of 300mm. The frame containing the forming material was placed in an oven at 80°C, and the forming material was foamed and cured for 20 minutes. Then, the cured forming material was taken out of the oven, and further dried in the oven at 80°C for 12 hours to obtain a phenolic resin foam product. Physical properties of the obtained phenolic resin foam product were measured according to the above-described methods. Results of the measurements are shown in Tables 1 and 2.

- Example 2 -

A phenolic resin foam product was prepared in the same manner as in Example 1, except that 2 parts by mass of calcium carbonate was further added as an inorganic filler and the amount of the curing agent in this example was 18 parts by mass. The physical properties of the obtained phenolic resin foam product are shown in Tables 1 and 2.

- Example 3 -

A phenolic resin foam product was prepared in the same manner as in Example 2, except that the amount of isopropyl chloride in this example was 8.0 parts by mass, and the amount of dimethylpolysiloxane in this example was 0.2 part by mass. The physical properties of the obtained phenolic resin foam product are shown in Tables 1 and 2.

- Example 4 -

A phenolic resin foam product was prepared in the same manner as in Example 2, except that the amount of isopropyl chloride in this example was 8.0 parts by mass, and the amount of dimethylpolysiloxane in this example was 0.8 part by mass. The physical properties of the obtained phenolic resin foam product are shown in Tables 1 and 2.

- Example 5 -

A phenolic resin foam product was prepared in the same manner as in Example 2, except that the amount of isopropyl chloride in this example was 8.0 parts by mass, and the amount of dimethylpolysiloxane in this example was 3.0 parts by mass. The physical properties of the obtained phenolic resin foam product are shown in Tables 1 and 2.

- Example 6 -

A phenolic resin foam product was prepared in the same manner as in Example 2, except that the amount of isopropyl chloride in this example was 6.0 parts by mass, and the amount of dimethylpolysiloxane in this example was 0.2 part by mass. The physical properties of the obtained phenolic resin foam product are shown in Tables 1 and 2.

- Example 7 -

A phenolic resin foam product was prepared in the same manner as in Example 2, except that the amount of isopropyl chloride in this example was 6.0 parts by mass, and the amount of dimethylpolysiloxane in this example was 1.0 part by mass. The physical properties of the obtained phenolic resin foam product are shown in Tables 1 and 2.

- Example 8 -

A phenolic resin foam product was prepared in the same manner as in Example 2, except that the amount of isopropyl chloride in this example was 6.0 parts by mass, and the amount of dimethylpolysiloxane in this example was 2.0 parts by mass. The physical properties of the obtained phenolic resin foam product are shown in Tables 1 and 2.

- Example 9 -

A phenolic resin foam product was prepared in the same manner as in Example 2, except that the amount of isopropyl chloride in this example was 10.0 parts by mass, and the amount of dimethylpolysiloxane in this example was 0.6 part by mass. The physical properties of the obtained phenolic resin foam product are shown in Tables 1 and 2.

- Example 10 -

A phenolic resin foam product was prepared in the same manner as in Example 2, except that the amount of

isopropyl chloride in this example was 10.0 parts by mass, and the amount of dimethylpolysiloxane in this example was 1.0 part by mass. The physical properties of the obtained phenolic resin foam product are shown in Tables 1 and 2.

- Example 11 -

A phenolic resin foam product was prepared in the same manner as in Example 2, except that the amount of isopropyl chloride in this example was 10.0 parts by mass, and the amount of dimethylpolysiloxane in this example was 3.0 parts by mass. The physical properties of the obtained phenolic resin foam product are shown in Tables 1 and 2.

- Example 12 -

A phenolic resin foam product was prepared in the same manner as in Example 2, except that the blowing agent in this example was a mixture obtained by mixing isopropyl chloride and isopentane at a ratio of 85:15. The physical properties of the obtained phenolic resin foam product are shown in Tables 1 and 2.

- Example 13 -

A phenolic resin foam product was prepared in the same manner as in Example 2, except that the curing agent in this example was xylenesulfonic acid alone. The physical properties of the obtained phenolic resin foam product are shown in Tables 1 and 2.

- Example 14 -

A phenolic resin foam product was prepared in the same manner as in Example 2, except that the silicone oil in this example was dimethylpolysiloxane (Product Name "KF-96L-2cs" available from Shin-Etsu Chemical Co., Ltd.) having a kinetic viscosity of 2.0 $mm^2/s$ at 25°C. The physical properties of the obtained phenolic resin foam product are shown in Tables 1 and 2.

- Example 15 -

A phenolic resin foam product was prepared in the same manner as in Example 2, except that the silicone oil in this example was dimethylpolysiloxane (Product Name "KF-96L-5cs" available from Shin-Etsu Chemical Co., Ltd.) having a kinetic viscosity of 5.0 $mm^2/s$ at 25°C. The physical properties of the obtained phenolic resin foam product are shown in Tables 1 and 2.

- Comparative Example 1 -

A phenolic resin foam product was prepared in the same manner as in Example 1, except that the silicone oil was not added. The physical properties of the obtained phenolic resin foam product are shown in Tables 1 and 2.

- Comparative Example 2 -

A phenolic resin foam product was prepared in the same manner as in Example 1, except that the curing agent in this example was 16 parts by mass of a mixture obtained by mixing p-toluenesulfonic acid and xylenesulfonic acid at a mass ratio of 2:1, and the blowing agent in this example was isopentane. The physical properties of the obtained phenolic resin foam product are shown in Tables 1 and 2.

-Comparative Example 3 -

A phenolic resin foam product was prepared in the same manner as in Example 1, except that the curing agent in this example was 16 parts by mass of a mixture obtained by mixing p-toluenesulfonic acid and xylenesulfonic acid at a mass ratio of 2:1, the blowing agent in this example was isopentane, and the silicone oil was not added. The physical properties of the obtained phenolic resin foam product are shown in Tables 1 and 2.

[Table 1]

| | Density ($kg/m^3$) | Initial Thermal Conductivity [20°C] (W/m·K) | Estimated Thermal Conductivity after 25 Years [20°C] (W/m·K) | Brittleness (%) | pH | Corrosion Preventing Property | Water Absorption ($g/100cm^2$) |
|---|---|---|---|---|---|---|---|
| Example 1 | 30 | 0.0181 | 0.0190 | 11 | 4.2 | No Problem | 3.3 |
| Example 2 | 30 | 0.0182 | 0.0192 | 13 | 6.5 | No Problem | 3.0 |
| Example 3 | 30 | 0.0185 | 0.0198 | 14 | 6.3 | No Problem | 3.8 |
| Example 4 | 30 | 0.0182 | 0.0193 | 13 | 6.3 | No Problem | 3.0 |
| Example 5 | 29 | 0.0193 | 0.0209 | 16 | 6.3 | No Problem | 2.8 |
| Example 6 | 34 | 0.0185 | 0.0198 | 14 | 6.3 | No Problem | 3.8 |
| Example 7 | 34 | 0.0189 | 0.0197 | 14 | 6.4 | No Problem | 3.3 |
| Example 8 | 33 | 0.0190 | 0.0200 | 15 | 6.3 | No Problem | 2.9 |
| Example 9 | 27 | 0.0183 | 0.0193 | 18 | 6.5 | No Problem | 3.3 |
| Example 10 | 27 | 0.0180 | 0.0191 | 17 | 6.4 | No Problem | 3.5 |
| Example 11 | 27 | 0.0191 | 0.0200 | 18 | 6.5 | No Problem | 3.0 |
| Example 12 | 30 | 0.0182 | 0.0191 | 12 | 6.4 | No Problem | 3.5 |
| Example 13 | 30 | 0.0182 | 0.0195 | 17 | 6.0 | No Problem | 4.0 |
| Example 14 | 30 | 0.0192 | 0.0208 | 16 | 6.4 | No Problem | 3.6 |
| Example 15 | 30 | 0.0197 | 0.0217 | 17 | 6.5 | No Problem | 3.8 |
| Comparative Example 1 | 30 | 0.0183 | 0.0197 | 14 | 4.2 | No Problem | 5.0 |
| Comparative Example 2 | 30 | 0.0223 | 0.0280 | 14 | 4.1 | No Problem | 3.0 |
| Comparative Example 3 | 30 | 0.0226 | 0.0286 | 15 | 4.1 | No Problem | 3.0 |

[Table 2]

| | Moisture Permeance (ng/m$^2$·s·Pa) | Oxygen Index (%) | Closed Cell Content (%) | Compressive Strength (N/cm$^2$) | Dimensional Change Percentage (%) |
|---|---|---|---|---|---|
| Example 1 | 40 | 33 | 96 | 20 | 1.7 |
| Example 2 | 42 | 33 | 94 | 18 | 1.6 |
| Example 3 | 41 | 33 | 95 | 17 | 1.6 |
| Example 4 | 40 | 33 | 93 | 17 | 1.5 |
| Example 5 | 40 | 32 | 90 | 16 | 1.5 |
| Example 6 | 43 | 33 | 91 | 18 | 1.4 |
| Example 7 | 42 | 33 | 93 | 19 | 1.4 |
| Example 8 | 40 | 32 | 90 | 18 | 1.5 |
| Example 9 | 47 | 31 | 91 | 14 | 2.0 |
| Example 10 | 45 | 31 | 92 | 14 | 1.9 |
| Example 11 | 45 | 30 | 90 | 13 | 1.8 |
| Example 12 | 42 | 33 | 96 | 18 | 1.6 |
| Example 13 | 45 | 31 | 91 | 14 | 1.9 |
| Example 14 | 40 | 32 | 92 | 18 | 1.7 |
| Example 15 | 42 | 33 | 90 | 17 | 1.8 |
| Comparative Example 1 | 40 | 33 | 94 | 20 | 2.7 |
| Comparative Example 2 | 41 | 33 | 65 | 16 | 1.7 |
| Comparative Example 3 | 42 | 33 | 70 | 17 | 2.5 |

The phenolic resin foam product of the present invention is obtained by using the blowing agent containing the chloropropane, and using the nitrogen-containing bridged cyclic compound and the silicone oil as the additives, so that the phenolic resin foam product is excellent in flame retardancy and fireproofness, maintains an excellent heat insulation property, and is improved in the mechanical strength, brittleness and appearance. Further, the phenolic resin foam product suffers from a reduced amount of dimensional change during its formation, making it possible to reduce a difference between a dimensional change percentage of the foam product and a dimensional change percentage of the face material used together with the foam product, whereby appearance defects such as occurrence of wrinkles in the face material and separation of the face material can be reduced. Moreover, the phenolic resin foam product of the present invention absorbs a reduced amount of water and has a high pH, so that the phenolic resin foam product has an excellent corrosion preventing property.

## Claims

1. A foamable resol-type phenolic resin forming material **characterized by** comprising at least a liquid resol-type phenolic resin, a blowing agent and an acid curing agent, and further comprising a nitrogen-containing bridged cyclic compound and a silicone oil as additives, wherein said blowing agent is a chloropropane, said nitrogen-containing bridged cyclic compound is hexamethylenetetramine, and said silicone oil is dimethylpolysiloxane and/or trimethylmethoxysilane.

2. The foamable resol-type phenolic resin forming material according to claim 1, wherein a total amount of said chloropropane and said silicone oil is 5-20 parts by mass with respect to 100 parts by mass of said liquid resol-type phenolic resin.

**3.** The foamable resol-type phenolic resin forming material according to claim 1 or 2, wherein said chloropropane and said silicone oil are used at a mass ratio of from 1:1 to 150:1.

**4.** The foamable resol-type phenolic resin forming material according to any one of claims 1 to 3, wherein said chloropropane is isopropyl chloride.

**5.** The foamable resol-type phenolic resin forming material according to any one of claims 1 to 4, which comprises 0.1-10 parts by mass of said nitrogen-containing bridged cyclic compound with respect to 100 parts by mass of said liquid resol-type phenolic resin.

**6.** The foamable resol-type phenolic resin forming material according to any preceding claim, wherein a kinetic viscosity of said dimethylpolysiloxane at 25°C is $5mm^2/s$ or less.

**7.** The foamable resol-type phenolic resin forming material according to any one of claims 1 to 6, wherein said acid curing agent is an aryl sulfonic acid.

**8.** The foamable resol-type phenolic resin forming material according to any one of claims 1 to 7, which further comprises 0.125-1.000 part by mass of a foam stabilizer with respect to 1 part by mass of said blowing agent.

**9.** The foamable resol-type phenolic resin forming material according to claim 8, wherein said foam stabilizer is an ethylene oxide adduct of castor oil obtained by adding more than 20 mol and less than 40 mol of ethylene oxide to 1 mol of castor oil.

**10.** The foamable resol-type phenolic resin forming material according to any one of claims 1 to 9, which further comprises a polyester polyol as a plasticizer.

**11.** The foamable resol-type phenolic resin forming material according to any one of claims 1 to 10, which further comprises aluminum hydroxide and/or calcium carbonate as an inorganic filler.

**12.** A phenolic resin foam product obtained by foaming and curing a foamable resol-type phenolic resin forming material according to any one of claims 1 to 11.

**13.** The phenolic resin foam product according to claim 12, which has a dimensional change percentage of 2.0% or less, when measured as follows:

A sample of the foamable resol-type phenolic resin forming material is foamed and cured in a frame; the thickness, width and length of the cured sample are measured according to JIS A 9511 and compared with corresponding dimensions of the frame using the formula

$$\text{(Change Percentage of a Dimension)} = \{\text{(Dimension of the Frame)} - \text{(Dimension of the Sample)}\} \div \text{(Dimension of the Frame)} \times 100\ (\%)$$

and then an average of the three "change percentage of a dimension" values is calculated.

**14.** The phenolic resin foam product according to claim 12 or 13, which is provided with a face material on at least one surface thereof.

**Patentansprüche**

**1.** Schäumbares Phenolharz-Formmaterial vom Resoltyp, **dadurch gekennzeichnet, dass** es zumindest ein flüssiges Phenolharz vom Resoltyp, ein Treibmittel und einen Säurehärter umfasst, und das weiters eine stickstoffhältige, verbrückte, zyklische Verbindung und ein Siliconöl als Additive umfasst, wobei das Treibmittel ein Chlorpropan ist, die stickstoffhältige, verbrückte, zyklische Verbindung Hexamethylentetramin ist und das Siliconöl Dimethylpolysiloxan und/oder Trimethylmethoxysilan ist.

2. Schäumbares Phenolharz-Formmaterial vom Resoltyp nach Anspruch 1, wobei die Gesamtmenge des Chlorpropans und des Siliconöls 5-20 Masseteile, bezogen auf 100 Masseteile des flüssigen Phenolharzes vom Resoltyp, beträgt.

3. Schäumbares Phenolharz-Formmaterial vom Resoltyp nach Anspruch 1 oder 2, wobei das Chlorpropan und das Siliconöl in einem Masseverhältnis von 1:1 bis 150:1 eingesetzt werden.

4. Schäumbares Phenolharz-Formmaterial vom Resoltyp nach einem der Ansprüche 1 bis 3, wobei das Chlorpropan Isopropylchlorid ist.

5. Schäumbares Phenolharz-Formmaterial vom Resoltyp nach einem der Ansprüche 1 bis 4, das 0,1-10 Masseteile der stickstoffhältigen, verbrückten, zyklischen Verbindung, bezogen auf 100 Masseteile des flüssigen Phenolharzes vom Resoltyp, umfasst.

6. Schäumbares Phenolharz-Formmaterial vom Resoltyp nach einem der vorangegangenen Ansprüche, wobei die kinetische Viskosität des Dimethylpolysiloxans bei 25 °C 5 $mm^2/s$ oder weniger beträgt.

7. Schäumbares Phenolharz-Formmaterial vom Resoltyp nach einem der Ansprüche 1 bis 6, wobei der Säurehärter eine Arylsulfonsäure ist.

8. Schäumbares Phenolharz-Formmaterial vom Resoltyp nach einem der Ansprüche 1 bis 7, das weiters 0,125-1,000 Masseteile eines Schaumstabilisators, bezogen auf 1 Masseteil des Treibmittels, umfasst.

9. Schäumbares Phenolharz-Formmaterial vom Resoltyp nach Anspruch 8, wobei der Schaumstabilisator ein Ethylenoxidaddukt von Castoröl ist, das durch Addition von mehr als 20 Mol und weniger als 40 Mol Ethylenoxid an 1 Mol Castoröl erhalten wird.

10. Schäumbares Phenolharz-Formmaterial vom Resoltyp nach einem der Ansprüche 1 bis 9, das weiters ein Polyesterpolyol als Weichmacher umfasst.

11. Schäumbares Phenolharz-Formmaterial vom Resoltyp nach einem der Ansprüche 1 bis 10, das weiters Aluminiumhydroxid und/oder Calciumcarbonat als anorganischen Füllstoff umfasst.

12. Phenolharz-Schaumprodukt, das durch Schäumen und Härten eines schäumbaren Phenolharz-Formmaterials vom Resoltyp nach einem der Ansprüche 1 bis 11 erhalten ist.

13. Phenolharz-Schaumprodukt nach Anspruch 12, das eine prozentuelle Dimensionsänderung von 2,0 % oder weniger aufweist, wenn wie folgt gemessen wird:

eine Probe des schäumbaren Phenolharz-Formmaterials vom Resoltyp wird geschäumt und in einem Rahmen gehärtet; die Dicke, Breite und Länge der gehärtete Probe werden gemäß JIS A 9511 gemessen und unter Verwendung der folgenden Formel mit entsprechenden Abmessungen des Rahmens verglichen:

(prozentuelle Änderung einer Dimension) = {(Dimension des Rahmens) - (Dimension der Probe)} / (Dimension des Rahmens) x 100 (%)

wonach das Mittel der drei Werte der "prozentuellen Änderung einer Dimension" berechnet wird.

14. Phenolharz-Schaumprodukt nach Anspruch 12 oder 13, das auf zumindest einer Oberfläche mit einem Deckmaterial versehen ist.

**Revendications**

1. Matière à mouler de résine phénolique de type résol moussable, **caractérisé par** le fait de comprendre au moins une résine phénolique liquide de type résol, un agent gonflant et un agent durcisseur acide, et comprenant en outre un composé cyclique azoté ponté et une huile de silicone comme additifs, l'agent gonflant étant un chloropropane,

le composé cyclique azoté ponté étant de l'hexaméthylènetétramine et l'huile de silicone étant du diméthylpolysiloxane et/ou du triméthylméthoxysilane.

2. Matière à mouler de résine phénolique de type résol moussable selon la revendication 1, **caractérisé en ce qu'**une quantité totale dudit chloropropane et de ladite huile de silicone représente 5 à 20 parts en masse par rapport à 100 parts en masse de ladite résine phénolique liquide de type résol.

3. Matière à mouler de résine phénolique de type résol moussable selon la revendication 1 ou 2, **caractérisé en ce que** le chloropropane et ladite huile de silicone sont utilisés avec un rapport de masse de 1 :1 à 150 :1.

4. Matière à mouler de résine phénolique de type résol moussable selon l'une des revendications 1 à 3, **caractérisé en ce que** le chloropropane est du chlorure d'isopropyle.

5. Matière à mouler de résine phénolique de type résol moussable selon l'une quelconque des revendications 1 à 4, qui comprend 0,1 à 10 parts en masse du composé cyclique azoté ponté par rapport à 100 parts en masse de ladite résine phénolique liquide de type résol.

6. Matière à mouler de résine phénolique de type résol moussable selon l'une quelconque des revendications précédentes, **caractérisé en ce qu'**une viscosité cinétique du diméthylpolysiloxane à 25 °C est 5 $mm^2/s$ ou moins.

7. Matière à mouler de résine phénolique de type résol moussable selon l'une quelconque des revendications 1 à 6, **caractérisé en ce que** l'agent durcisseur acide est un acide sulfonique d'aryle.

8. Matière à mouler de résine phénolique de type résol moussable selon l'une quelconque des revendications 1 à 7, qui comprend en outre 0,125 à 1000 parts en masse d'un stabilisateur de mousse par rapport à 1 part en masse de l'agent gonflant.

9. Matière à mouler de résine phénolique de type résol moussable selon la revendication 8, **caractérisé en ce que** le stabilisateur de mousse est un adduit d'oxyde d'éthylène d'huile de ricin obtenu en ajoutant plus que 20 mol et moins que 40 mol d'oxyde d'éthylène à 1 mol d'huile de ricin.

10. Matière à mouler de résine phénolique de type résol moussable selon l'une quelconque des revendications 1 à 9, qui comprend en outre un polyol de polyester comme plastifiant.

11. Matière à mouler de résine phénolique de type résol moussable selon l'une quelconque des revendications 1 à 10, qui comprend en outre de l'hydroxyde d'aluminium et/ou du carbonate de calcium comme charge inorganique.

12. Produit en mousse de résine phénolique obtenu en moussant et durcissant une matière à mouler de résine phénolique de type résol moussable selon l'une quelconque des revendications 1 à 11.

13. Produit en mousse de résine phénolique selon la revendication 12, qui présente un pourcentage de changement de dimensions de 2,0 % ou moins, lorsqu'il est mesuré comme suit :

un échantillon de matière à mouler de résine phénolique de type résol moussable est moussé et durci dans un cadre, l'épaisseur, la largeur et la longueur de l'échantillon durci sont mesurées selon JIS A 9511 et comparées aux dimensions correspondantes du cadre en utilisant la formule

Pourcentage de changement d'une dimension = {(dimension du cadre) - (dimension de l'échantillon)} : (dimension du cadre) x 100 (%), et

ensuite, une moyenne des trois valeurs de « pourcentages de changement de dimensions » est calculée.

14. Produit en mousse de résine phénolique selon la revendication 12 ou 13, qui est pourvu d'une matière frontale sur au moins une de ses surfaces.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5087093 B
- JP 61268733 A
- JP 63039933 A
- EP 1923422 A